# EUROPÄISCHE PATENTSCHRIFT

(11) **EP 1 240 413 B1**
(45) Veröffentlichungstag und Bekanntmachung des Hinweises auf die Patenterteilung: **17.11.2004**
(21) Anmeldenummer: 00990510.0
(22) Anmeldetag: 04.12.2000
(51) Int. Cl.: F01K 13/00, F01K 17/02, H05K 7/20

(54) **INDUSTRIELLE ANLAGE UND BETRIEBSMITTELCONTAINER**
INDUSTRIAL INSTALLATION AND CONTAINER FOR OPERATIONAL EQUIPMENT
INSTALLATION INDUSTRIELLE ET CONTENEUR POUR EQUIPEMENTS DE COMMANDE

(30) Priorität: 21.12.1999 DE 19961809
(43) Veröffentlichungstag der Anmeldung: 18.09.2002
(73) Patentinhaber: SIEMENS AKTIENGESELLSCHAFT, 80333 München (DE)
(72) Erfinder: MADL, Peter, 91301 Forchheim (DE)
(86) Internationale Anmeldenummer: PCT/DE2000/004318
(87) Internationale Veröffentlichungsnummer: WO 2001/046565

(56) Entgegenhaltungen:
- FR-A- 2 452 196
- US-A- 3 925 679
- US-A- 4 685 617
- PATENT ABSTRACTS OF JAPAN vol. 018, no. 090 (M-1560), 15. Februar 1994 (1994-02-15) & JP 05 296008 A (ISE KOGYOSHO:YUGEN), 9. November 1993 (1993-11-09)

## Beschreibung

Die Erfindung betrifft eine industrielle Anlage, insbesondere ein Kraftwerk zur Energieerzeugung, mit einem Betriebsmittelcontainer zum Betreiben von Anlagenkomponenten. Die Erfindung betrifft weiterhin einen Betriebsmittelcontainer für eine solche Anlage.

Zum Betreiben und Steuern der Anlage, also zum Betreiben von Anlagenkomponenten und von Anlagenprozessen, sind üblicherweise in einem Betriebsmittelraum unterschiedliche elektrische Einrichtungen angeordnet. Die elektrischen Einrichtungen sind beispielsweise elektrische Geräte, wie ein Transformator, eine Einrichtung zur Niederspannungsverteilung oder zur Gleichstromverteilung, ein Gleichrichter, Batterien usw. Unter elektrischer Einrichtung wird auch eine komplette Wartenraumeinrichtung verstanden. Da im Betriebsmittelraum insbesondere auch komplexe leittechnische Einrichtungen zur Steuerung der Anlagenprozesse untergebracht sind, ist eine aufwendige Verkabelung der einzelnen Einrichtungen im Betriebsmittelraum untereinander und mit Anlagenkomponenten und dezentralen leittechnischen Einrichtungen außerhalb des Betriebsmittelraums notwendig. Die konventionelle Anlagenkonzeption geht dabei derart vor, dass die elektrischen Einrichtungen erst auf der Baustelle in einen feststehenden, in einem Gebäudetrakt der Anlage integrierten, Betriebsmittelraum eingebaut werden. Die elektrischen Einrichtungen müssen dementsprechend vor Ort auf der Anlage miteinander verbunden werden. Aufgrund oftmals unzureichend geschultem Personal besteht hierbei ein relativ großes Fehlerpotential.

Neuere Bestrebungen gehen dahin, Betriebsmittelräume als Betriebsmittelcontainer auszuführen, die standardisierte elektrische Einrichtungen aufweisen, die im Container bereits vorgefertigt miteinander verbunden sind. Der Betriebsmittelcontainer wird von geschultem Fachpersonal bereits im Werk zusammengesetzt. Für den einfachen und fehlerfreien Anschluss des Betriebsmittelcontainers vor Ort weist dieser insbesondere standardisierte Anschlüsse auf. Ein als Leitstellenraumzelle ausgebildeter Betriebsmittelcontainer ist aus der technischen Informationsbroschüre der Siemens AG (Deutschland), Bereich Automatisierungstechnik, Druckdatum 08/97, mit dem Titel "Leitstellenraumzelle in Fertigbauweise" bekannt. In dieser Leitstellenraumzelle sind sämtliche für den Betrieb einer Leitstelle notwendigen Installationen vorgefertigt montiert. Dies umfasst sowohl technische Einrichtungen als auch Büroeinrichtungen bis hin zu sanitären Einrichtungen und Besprechungsräume. Die Leitstellenraumzelle wird betriebsbereit ausgeliefert, und braucht vor Ort nur noch an wenige Installationsleitungen angeschlossen werden.

Um die Funktionsfähigkeit des Betriebsmittelcontainers zu gewährleisten ist eine Klimaanlage erforderlich, die die Temperatur im Container auf eine gewünschte Temperatur hält. Da ein Ausfall der Klimaanlage unter Umständen zu einem Ausfall der Einrichtungen im Container und damit zu einem Ausfall der Anlagensteuerung führen kann, ist die Klimaanlage aus Sicherheitsgründen üblicherweise redundant ausgeführt. Dies hat den Nachteil von relativ hohen Kosten für die Klimatisierung. Für den Container sind üblicherweise herkömmliche elektrisch betriebene Klimaanlagen vorgesehen, die auf dem Dach des Containers angeordnet sind. Je nach erforderlicher Klimaleistung der Klimaanlage variiert der Stromverbrauch und kann sich merkbar negativ auf das Betriebsergebnis der Anlage auswirken.

Dies gilt insbesondere für kleine Anlagen zur Energieerzeugung, deren Generatorleistung insbesondere auf 5MW begrenzt ist. Denn aufgrund gesetzlicher Vorgaben (Stromeinspeisegesetz) ist es gegenwärtig möglich für mit solchen Kleinstkraftanlagen erzeugten Strom einen relativ hohen Preis pro Leistungseinheit zu erzielen. Das Bestreben geht daher dahin, den anlageninternen Stromverbrauch möglichst gering zu halten, um bei einer begrenzten Generatorleistung einen maximalen Anteil der erzeugten Leistung ins Netz einspeisen zu können. Der insbesondere durch die redundante Ausführung der Klimaanlage bedingte hohe Stromverbrauch schmälert den Wirkungsgrad der Anlage merklich. Unter Wirkungsgrad wird hierbei der Anteil der vom Generator bereitgestellten elektrischen Leistung im Vergleich zu der ins Netz eingespeisten elektrischen Leistung verstanden.

Aus der US 4,685,617 ist für die Beheizung und für die Einstellung der Feuchtigkeit insbesondere eines Gewächshauses eine Einrichtung zu entnehmen, die an einen Kühlkreislauf einer Anlage zur Energieerzeugung angeschlossen ist.

Der vorliegenden Erfindung liegt die Aufgabe zugrunde, einen möglichst hohen Wirkungsgrad einer Anlage zu ermöglichen.

Zur Lösung der Aufgabe weist gemäß der Erfindung eine industrielle Anlage, insbesondere ein Kraftwerk zur Energieerzeugung, eine Anzahl von Anlagenkomponenten, einen Kühlkreislauf als Reservoir für bei einem Anlagenprozess anfallende thermische Energie sowie einen als separate Baueinheit ausgebildeten Betriebsmittelcontainer auf. Im Betriebsmittelcontainer ist zumindest eine für den Betrieb der Anlagenkomponenten vorgesehene elektrische Einrichtung angeordnet. Zur Klimatisierung des Betriebsmittelcontainers ist eine Klimaanlage vorgesehen, die mit dem Kühlkreislauf verbunden ist und über eine Schalteinheit an einer Wärmequelle und an einer Wärmesenke des Kühlkreislaufs angeschlossen ist.

Der Erfindung liegt die prinzipielle Idee zugrunde, für die Klimatisierung des Betriebsmittelcontainers auf einen in der Anlage vorhandene Kühlkreislauf als Reservoir zurückzugreifen. Unter Reservoir wird hierbei ein Wärmespeicher mit einem Speichermedium verstanden, welches zur Speicherung, also zur Aufnahme und Abgabe von thermischer Energie geeignet ist. Je nach Temperaturniveau im Reservoir kann dieses für die Klimatisierung des Betriebscontainers sowohl zur Kühlung als auch zur Beheizung herangezogen werden. Der entscheidende Vorteil der Verwendung eines Reservoirs, das mit beim Anlagenprozess anfallender thermischer Energie gespeist wird, besteht darin, dass die für die Klimatisierung erforderliche elektrische Energie nahezu auf Null reduziert wird. Die für die Klimatisierung notwendige Energie wird quasi aus der beim Anlagenbetrieb anfallenden "Abfallenergie" bereitgestellt.

Die Ausbildung des Betriebsmittelcontainers als separate Baueinheit hat den Vorteil, dass der Betriebsmittelcontainer vorgefertigt zur Anlage gebracht und dort schnell und einfach mit Anlagenkomponenten ohne großen Installationsaufwand verbunden werden kann. Vorzugsweise ist die Klimaanlage bereits im Container vorinstalliert. Mit der Containerlösung werden insbesondere die Inbetriebnahmezeiten und damit die Investitionskosten der Anlage günstig beeinflusst.

Der Kühlkreislauf mit seinem Kühlmedium, insbesondere Kühlwasser, eignet sich besonders gut als Reservoir. Ein solcher Kühlkreislauf ist in einer Vielzahl von Anlagen zum Betreiben unterschiedlicher Anlagenkomponenten notwendig. Insbesondere bei einer Anlage zur thermischen Energieerzeugung (Kraftwerk), bei der Wasser erhitzt wird, muss dieses für einen ausreichend hohen Wirkungsgrad in einem Kreislauf geführt und gekühlt werden. Dabei wird generell ein nicht unerheblicher Anteil der Wärmeenergie an die Umwelt abgegeben, welcher in vorteilhafter Weise für das Betreiben der Klimaanlage herangezogen wird.

Der Kühlkreislauf weist sowohl eine Wärmequelle als auch eine Wärmesenke auf, so dass er sowohl zur Beheizung als auch zur Kühlung des Containers herangezogen werden kann. Wärmequelle und Wärmesenke weisen hierzu vorzugsweise unterschiedliche Temperaturen auf. Die Wärmequelle wird bei dem Kühlkreislauf insbesondere durch den Rücklauf des Kühlmediums in einen Kühlturm, und die Wärmesenke durch den Vorlauf des Kühlmediums aus dem Kühlturm gebildet.

Zur Einstellung einer geeigneten Leistung der Klimaanlage ist weiterhin eine Schalteinheit vorgesehen, über die die Klimaanlage mit der Wärmequelle und der Wärmesenke verbunden ist. Die Schalteinheit dient hierbei dazu, entweder alternativ zwischen der Wärmequelle und der Wärmesenke zu schalten, oder die von der Wärmequelle und von der Wärmesenke jeweils bereitgestellte thermische Energie miteinander in geeigneter Weise entsprechend den aktuellen Anforderungen zu mischen.

Bei der Anlage zur Energieerzeugung ist in der Regel ein Hauptkühlkreislauf und zusätzlich ein Nebenkühlkreislauf mit im Vergleich zum Hauptkühlkreislauf reduzierter thermischer Leistung vorgesehen. Da diese Leistung in der Regel ein Vielfaches der zur Klimatisierung benötigten thermischen Leistung beträgt, ist - insbesondere auch aus Standardisierungsgründen - die Klimaanlage vorzugsweise mit diesem Nebenkühlkreislauf verbunden. Der Nebenkühlkreislauf dient beispielsweise zur Kühlung von Turbinenöl oder zur Generatorkühlung.

Vorzugsweise ist die thermische Leistung des Kühlkreislaufes, also die vom Reservoir bereitgestellte thermische Leistung, wesentlich höher als die der Klimaanlage. Dadurch wird sichergestellt, dass die Klimaanlage die Kühlleistung nicht beeinflusst. Bei einer derartigen Dimensionierung kann die Klimaanlage ohne Probleme in bestehende Anlagen eingebaut werden.

In einer besonders einfachen und damit auch robusten und kostengünstigen Ausgestaltung weist die Klimaanlage vorzugsweise einen Wasser/Luft-Wärmetauscher auf. Die in dem Kühlwasser des Kühlkreislaufes gespeicherte thermische Energie wird demnach über einen solchen Wärmetauscher an die Luft im Betriebsmittelcontainer abgegeben.

In einer bevorzugten Ausführung ist eine Regeleinrichtung vorgesehen, über die in Abhängigkeit der Temperatur im Betriebsmittelraum die Leistung der Klimaanlage automatisch eingestellt wird. Mit dieser Regeleinrichtung wird daher in vorteilhafter Weise die Temperatur im Betriebsmittelraum bzw. im Container auf eine vorgegebene Solltemperatur geregelt.

Für eine möglichst hohe Flexibilität bei der Aufstellung sowie beim Austausch des Betriebsmittelcontainers ist dieser beweglich aufgestellt und weist hierzu Fahrmittel auf. Diese Fahrmittel sind beispielsweise Räder oder Rollen oder zum Anbringen von Rädern und Rollen vorgesehene Einrichtungen. Vorzugsweise ist der Container über Räder auf Schienen oder Stelzen gelagert. Dieser erleichtert das Positionieren und insbesondere das Austauschen des Containers. Insbesondere ist vorgesehen, standardisierte Betriebsmittelcontainer zur Verfügung zu stellen, so dass der Betriebsmittelcontainer in einfacher Weise durch einen anderen ausgetauscht werden kann. Bei einem Ausfall von im Container angeordneten elektrischen Einrichtungen, beispielsweise Steuereinrichtungen, kann dieser daher einfach komplett ausgetauscht werden. Damit wird die Stillstandszeit der Anlage auf ein Minimum reduziert.

In einer besonders vorteilhaften Weise ist die Anlage zur Energieerzeugung ausgelegt, wobei die maximal erzeugbare elektrische Leistung auf einige MW, insbesondere auf 5MW, begrenzt ist. Bei einer solchen Anlage macht sich die energiesparende Ausgestaltung der Klimaanlage besonders bemerkbar. Der Wirkungsgrad der Anlage wird dadurch - im Vergleich zur Verwendung einer herkömmlichen Klimaanlage - erhöht und das Betriebsergebnis verbessert. Dies gilt insbesondere aufgrund der für solche Kleinanlagen geltenden Bestimmungen, wonach sich ein hoher Ertrag pro erzeugter Leistungseinheit erzielen lässt.

Die Aufgabe wird gemäß der Erfindung weiterhin durch einen Betriebsmittelcontainer mit den Merkmalen des Patentanspruchs 8 gelöst.

Bevorzugte Ausführungsformen des Betriebsmittelcontainers sind den Unteransprüchen zu entnehmen. Der Betriebsmittelcontainer ist insbesondere durch einen modularen und standardisierten Aufbau gekennzeichnet. Die im Hinblick auf die Anlage aufgeführten zweckmäßigen Ausgestaltungen und Vorteile sind sinngemäß auch auf den Container anzuwenden.

Ein Ausführungsbeispiel der Erfindung wird im Folgenden anhand der Zeichnung näher erläutert. Es zeigen:
- FIG 1: eine Anlage zur Energieerzeugung in einer schematischen Blockbilddarstellung und
- FIG 2: ein beweglich auf Fahrmittel aufgestellter Betriebsmittelcontainer.

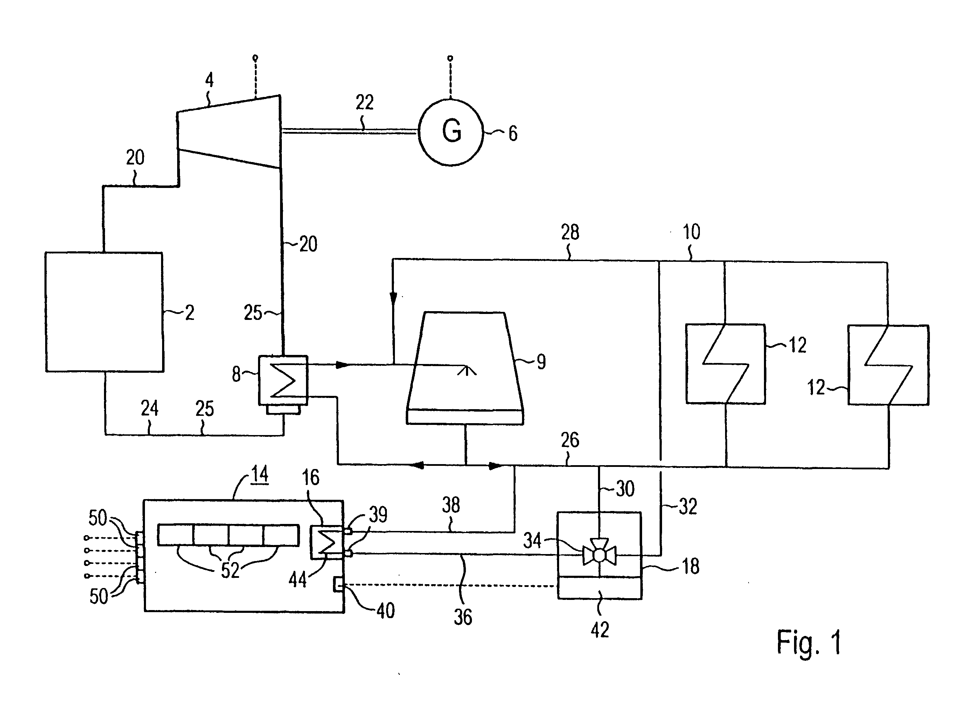

Gemäß FIG 1 umfasst eine Anlage zur Energieerzeugung eine thermische Energieerzeugungseinheit 2, eine Turbine 4, einen Generator 6, einen Kondensator 8, einen Kühlturm 9, mehrere in einem Nebenkühlkreislauf 10 angeordnete Wärmetauscher 12, einen Betriebsmittelcontainer 14 mit einer Klimaanlage 16 und eine mit der Klimaanlage 16 in Verbindung stehende Schalteinheit 18. Die thermische Energieerzeugungseinheit 2 umfasst beispielsweise eine Brennkammer und einen Dampferzeuger zur Erzeugung von Dampf. Dieser wird über eine Dampfleitung 20 der Turbine 4 zugeführt und treibt diese an. Die Turbinendrehung wird über eine Welle 22 an den Generator 6 zur Erzeugung von elektrischer Energie übermittelt. Die Dampfleitung 20 führt von der Turbine zum Kondensator 8, wo der Dampf kondensiert wird. Der Kondensator 8 ist in einem Hauptkühlkreislauf integriert und steht mit dem zum Kühlkreislauf gehörigen Kühlturm 9 in Verbindung. Der im Kondensator 8 kondensierte Dampf wird der Energieerzeugungseinheit 2 über eine Speisewasserleitung 24 als Speisewasser zugeführt.

Speisewasserleitung 24 und Dampfleitung 20 bilden einen Wasser-/Dampf-Kreislauf 25.

Um beim Betrieb der Anlage beispielsweise ein Überhitzen von Anlagenkomponenten, wie beispielsweise des Generators 6, zu verhindern, sind in dem Nebenkühlkreislauf 10 die Wärmetauscher 12 vorgesehen, über die solche Anlagenkomponenten temperiert werden.

Der Nebenkühlkreislauf 10 mit integriertem Kühlturm 9 bildet ein Reservoir für thermische Energie. Dieses bezieht seine Energie einerseits aus dem Anlagenprozess und andererseits durch Wärmeaustausch mit der Umgebung. Die im Reservoir enthaltene thermische Energie wird daher im Wesentlichen aus Abfallwärme des Energieerzeugungsprozesses bereitgestellt. Der Nebenkühlkreislauf 10 weist als Wärmesenke einen Vorlauf 26 und als Wärmequelle einen Rücklauf 28 auf. Typischerweise beträgt die Vorlauftemperatur im Nebenkühlkreislauf 10 25°C und die Rücklauftemperatur 35°C.

Derartige moderate Temperaturen sind für die Klimatisierung des Betriebsmittelcontainers 14 besonders geeignet. Die Klimaanlage 16 wird daher aus dem Nebenkühlkreislauf 10 mit thermischer Energie versorgt. Hierzu wird Kühlwasser über die Schalteinheit 18 zugeführt, die über eine Kaltwasserleitung 30 mit dem Vorlauf 26 und über eine Warmwasserleitung 32 mit dem Rücklauf 28 verbunden ist. Die Schalteinheit 18 umfasst ein Ventil 34, insbesondere ein 3-Wege-Ventil. Mit diesem kann die Klimaanlage 16 alternativ mit warmem Wasser bzw. mit kaltem Wasser oder mit einer Mischung versorgt werden, um eine geeignete Klimaleistung der Klimaanlage 16 zu erzielen. Die Klimaanlage 16 steht mit der Schalteinheit 18 über eine Mischleitung 36 in Verbindung. Diese Mischleitung 36 ist über einen Anschluss 39 am Betriebsmittelcontainer 14 mit der Klimaanlage 16 verbunden. Von einem weiteren Anschluss 39 führt von der Klimaanlage 16 eine Rückleitung 38 zum Nebenkühlkreislauf 10.

Im Betriebsmittelcontainer 14 ist vorzugsweise weiterhin ein Temperatursensor 40 angeordnet, der mit einer Regeleinrichtung 42 in Verbindung steht. Die Regeleinrichtung 42 steuert das 3-Wege-Ventil in Abhängigkeit der gemessenen Ist-Temperatur um eine gewünschte Soll-Temperatur einzustellen. Die Regeleinrichtung 42 sorgt insbesondere für eine automatische Regelung der Temperatur im Betriebsmittelcontainer 14.

Um die Installationen vor Ort auf der Anlage möglichst gering zu halten, sind die Schalteinheit 18 und die Regeleinrichtung 42 vorzugsweise im Betriebsmittelcontainer 14 integriert. In diesem Fall sind am Betriebsmittelcontainer 14 drei Anschlüsse 39 für Rohrleitungen angeordnet, und zwar einer für die Kaltwasser- und einer für die Warmwasserleitung sowie einer für die Rückleitung. Die Mischleitung 36 kann in diesem Fall entfallen.

Durch die Verbindung der Klimaanlage 16 mit dem Nebenkühlkreislauf 10 ist sowohl eine Kühlung als auch eine Erwärmung des Innenraums des Betriebsmittelcontainers 14 ermöglicht. Da die Klimaanlage auf Rest- oder Abfallenergie und auf Umgebungsenergie zurückgreift, benötigt sie nahezu keine elektrische Energie. Lediglich für ihre Regelung und Steuerung ist elektrische Energie notwendig. Es versteht sich von selbst, dass je nach Anlagentyp anstatt eines Kühlkreislaufes oder in Ergänzung zu diesem auch ein Heizkreislauf herangezogen werden kann. Ist der Betriebsmittelcontainer 14 als Wartenraum eingerichtet, so wird die Temperatur in der Regel auf Raumtemperatur, also etwa auf 22°C eingestellt. Da über den Nebenkühlkreislauf 10 in der Regel mit der Klimaanlage 16 lediglich Temperaturen im Bereich zwischen etwa 25°C und 30°C erreichbar sind, ist für diesen Anwendungsfall eine zusätzliche konventionelle Klimaanlage mit geringer Leistung vorgesehen, ausreichend um die Temperatur im Betriebsmittelcontainer 14 auf 22°C herunterzukühlen. Im Vergleich zur herkömmlichen Vollklimatisierung, mit konventioneller Klimaanlage ist die hier eingesetzte konventionelle Klimaanlage deutlich kleiner ausgeführt, und braucht nicht redundant ausgelegt zu werden. Dient er als Betriebsmittelraum für elektrische Komponenten, so wird die Klimaanlage 16 derart eingestellt, dass die Temperatur 35°C nicht überschreitet.

Die Klimaanlage 16 weist einen einfachen und robust ausgestalteten Wasser/Luft-Wärmetauscher 44 auf, der im Container 14 angeordnet ist. Die Klimatisierung erfolgt daher durch Wasserkühlung bzw. Wasserheizung. Diese Ausführung ist im Vergleich zu herkömmlichen Luft-Klimaanlagen, bei denen klimatisierte Luft eingeblasen wird, weniger störanfällig. Durch diese robuste Ausgestaltung ist die Klimaanlage 16 zudem weitgehend störungsfrei und sehr wartungsfreundlich. Neben den geringen Betriebskosten (geringe Energiekosten, geringer Wartungsaufwand) fallen durch die einfache Ausgestaltung zudem auch nur geringe Installationskosten an.

Im Betriebsmittelcontainer 14 sind mehrere elektrische Einrichtungen 52 angeordnet, die zum Betreiben und Steuern der Anlage über Steckverbindungen 50 mit unterschiedlichen Anlagenkomponenten, wie beispielsweise der Energieerzeugungseinheit 2, der Turbine 4 und dem Generator 6, in Verbindung stehen. Die elektrischen Einrichtungen 52 sind in der Regel unterschiedliche Komponenten. Beispielsweise bilden sie eine Wartenraumeinrichtung und umfassen die Leittechnik oder eine Schaltungsanlage. Sie dienen beispielsweise zur Niederspannungsverteilung, Gleichstromverteilung, zur Gleichrichtung und sind hierzu unter anderem als Transformatoren oder Batterien ausgestaltet. Vorzugsweise sind die einzelnen elektrischen Einrichtungen 52 vorgefertigt und standardisiert und bereits vor Aufstellung des Betriebsmittelcontainers 14 miteinander verkabelt. Auf der Anlage ist nur noch der Anschluss der einzelnen Anlagenkomponenten erforderlich. Hierzu sind die Steckverbindungen 50 standardisiert, also insbesondere vorkonfektioniert und codiert, so dass ein falsches Anschließen ausgeschlossen ist. Neben den elektrischen Einrichtungen ist beispielsweise auch eine nicht dargestellte Büroeinrichtung vorgesehen.

Vorzugsweise sind die elektrischen Einrichtungen 52 derart aufeinander abgestimmt und standardisiert, dass der Betriebsmittelcontainer 14 für unterschiedliche Anlagen eingesetzt werden kann. Es entfällt somit das aufwendige anlagenspezifische Konfigurieren der einzelnen Komponenten des Betriebsmittelcontainers 14.

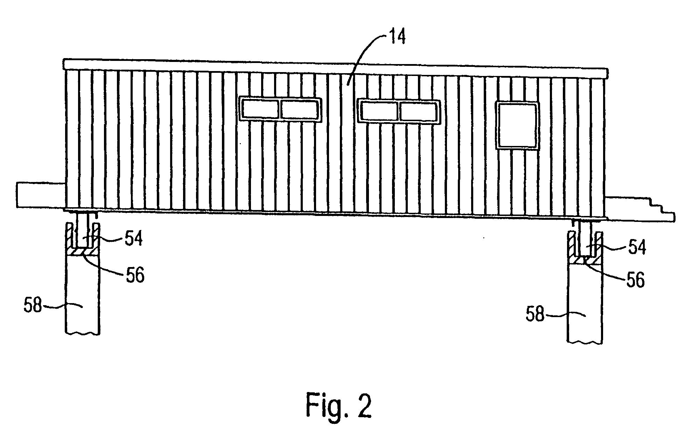

Der Betriebsmittelcontainer 14 weist gemäß FIG 2 Fahrmittel in Form von Rädern 54 auf, über die er auf Schienen 56 beweglich und leicht verschieblich gelagert ist. Die Schienen 56 sind in Stelzen 58 integriert, durch die unterhalb des Betriebsmittelcontainers 14 ein Freiraum gebildet ist, in dem Installationsleitungen, insbesondere auf sogenannten Kabelpritschen, verlegt werden. Gemäß der FIG 2 ist der Betriebsmittelcontainer 14 auf den Stelzen 58 seitlich verschieblich angeordnet. Alternativ hierzu kann er auch in seiner Längsrichtung verschieblich gelagert sein. Aufgrund der Aufstellung des Betriebsmittelcontainers 14 auf Schienen 56 ist ein einfaches Einschieben und Ausziehen des Containers 14 ermöglicht, wodurch seine Montagekosten gering gehalten werden. Zudem wird dadurch in Verbindung mit der Standardisierung ein sehr schnelles Austauschen des kompletten Containers 14 ermöglicht, wodurch im Fehlerfall die Standzeit der Anlage klein gehalten wird. Ein weiterer Vorteil der Containerlösung mit vorinstallierten elektrischen Einrichtungen 52 ist darin zu sehen, dass der Container 14 für die elektrischen Geräte zugleich als Verpackung und Transportsicherung dient und die elektrischen Einrichtungen 52 während der gesamten Betriebsdauer der Anlage schützt.

## Patentansprüche

1. Industrielle Anlage, insbesondere ein Kraftwerk zur Energieerzeugung, mit einer Anzahl von Anlagenkomponenten (2,4,6), mit einem Kühlkreislauf (8,9,10) als Reservoir für bei einem Anlagenprozess anfallende thermische Energie sowie mit einem als separate Baueinheit ausgebildeten Betriebsmittelcontainer (14), in dem eine elektrische Einrichtung (52) zum Betreiben der Anlagenkomponenten (2,4,6) angeordnet ist, **dadurch**
**gekennzeichnet, dass** für eine Klimatisierung des Betriebsmittelcontainers (14) eine mit dem Kühlkreislauf (8,9,10) verbundene Klimaanlage (16) vorgesehen ist, die über eine Schalteinheit (18) mit einer Wärmequelle (28) und mit einer Wärmesenke (26) des Kühlkreislaufs (8,9,10) zur Einstellung der Leistung der Klimaanlage (16) verbunden ist.

2. Anlage nach Anspruch 1, **dadurch**
**gekennzeichnet, dass** die Klimaanlage (16) mit einem Nebenkühlkreislauf (10) des Kühlkreislaufes (8,9,10) verbunden ist.

3. Anlage nach Anspruch 1 oder 2, **dadurch**
**gekennzeichnet, dass** die thermische Leistung des Kühlkreislaufes (8,9,10) wesentlich höher ist als die der Klimaanlage (16).

4. Anlage nach einem der vorhergehenden Ansprüche,
**dadurch gekennzeichnet, dass** die Klimaanlage (16) einen Wasser/Luft - Wärmetauscher (44) aufweist.

5. Anlage nach einem der vorhergehenden Ansprüche,
**dadurch gekennzeichnet, dass** eine Regeleinrichtung (42) zur Einstellung der Leistung der Klimaanlage (16) in Abhängigkeit der Temperatur im Betriebsmittelraum (14) vorgesehen ist.

6. Anlage nach einem der vorhergehenden Ansprüche,
**dadurch gekennzeichnet, dass** der Betriebsmittelcontainer 14 beweglich aufgestellt ist und hierzu Fahrmittel (46) aufweist.

7. Anlage nach einem der vorhergehenden Ansprüche,
**dadurch gekennzeichnet, dass** sie zur Energieerzeugung ausgelegt ist, wobei die maximal erzeugbare elektrische Leistung auf 5 MW begrenzt ist.

8. Betriebsmittelcontainer (14) für eine Anlage nach einem der vorhergehenden Ansprüche, der eine Klimaanlage (16) aufweist, **dadurch gekennzeichnet,**
**dass** er mit einem Anschluss (39) zum Verbinden der Klimaanlage (16) mit einem Kühlkreislauf (8,9,10) als Reservoir für bei einem Anlagenprozess anfallende thermische Energie ausgestattet ist, und dass eine Schalteinheit (18) vorgesehen ist, über die die Klimaanlage (16) mit einer Wärmequelle (28) und mit einer Wärmesenke (26) des Kühlkreislaufs (8, 9, 10) zur Einstellung der Leistung der Klimaanlage.(16) verbindbar ist.

9. Betriebsmittelcontainer (14) nach Anspruch 8,
**dadurch gekennzeichnet, dass** die Klimaanlage (16) einen Wasser/Luft - Wärmetauscher (44) aufweist.

10. Betriebsmittelcontainer (14) nach Anspruch 8 oder 9,
**dadurch gekennzeichnet, dass** eine Regeleinrichtung (42) zur Einstellung der Wärme/Kühlleistung der Klimaanlage (16) in Abhängigkeit der Temperatur im Betriebsmittelcontainer (14) vorgesehen ist.

11. Betriebsmittelcontainer (14) nach einem der Ansprüche 8 bis 10, **dadurch gekennzeichnet, dass** in ihm vorgefertigte elektrische Einrichtungen (52) angeordnet sind.

12. Betriebsmittelcontainer (14) nach Anspruch 13,
**dadurch gekennzeichnet, dass** er standardisierte Steckverbindungen (50) zum Anschluss der elektrischen Einrichtungen(52) an Anlagenkomponenten (2,4,6) aufweist.

## Claims

1. Industrial plant, in particular a power station for generating energy, having a number of plant components (2, 4, 6), a cooling circuit (8, 9, 10) as a reservoir for thermal energy arising during a plant process, and a container (14) for operational equipment which is designed as a separate construction unit and in which an electrical apparatus (52) for operating the plant components (2, 4, 6) is arranged, **characterized in that** an air-conditioning system (16) connected to the cooling circuit (8, 9, 10) is provided for air-conditioning the container (14) for operational equipment, this air-conditioning system (16) being connected via a switching unit (18) to a heat source (28) and a heat sink (26) of the cooling circuit (8, 9, 10) for setting the capacity of the air-conditioning system (16).

2. Plant according to Claim 1, **characterized in that** the air-conditioning system (16) is connected to a secondary cooling circuit (10) of the cooling circuit (8, 9, 10).

3. Plant according to Claim 1 or 2, **characterized in that** the thermal capacity of the cooling circuit (8, 9, 10) is substantially higher than that of the air-conditioning system (16).

4. Plant according to one of the preceding claims, **characterized in that** the air-conditioning system (16) has a water/air heat exchanger (44).

5. Plant according to one of the preceding claims, **characterized in that** a regulating device (42) is provided for setting the capacity of the air-conditioning system (16) as a function of the temperature in the room (14) for operational equipment.

6. Plant according to one of the preceding claims, **characterized in that** the container (14) for operational equipment is set up so as to be movable and to this end has travel means (46).

7. Plant according to one of the preceding claims, **characterized in that** it is designed for generating energy, the maximum electrical output which can be generated being limited to 5 MW.

8. Container (14) for operational equipment for a plant according to one of the preceding claims having an air-conditioning system (16), **characterized in that** it is equipped with a connection (39) for connecting the air-conditioning system (16) to a cooling circuit (8, 9, 10) as a reservoir for thermal energy arising during a plant process, and **in that** a switching unit (18) is provided, via which the air-conditioning system (16) can be connected to a heat source (28) and to a heat sink (26) of the cooling circuit (8, 9, 10) for setting the capacity of the air-conditioning system (16).

9. Container (14) for operational equipment according to Claim 8, **characterized in that** the air-conditioning system (16) has a water/air heat exchanger (44).

10. Container (14) for operational equipment according to Claim 8 or 9, **characterized in that** a regulating device (42) is provided for setting the heating/cooling capacity of the air-conditioning system (16) as a function of the temperature in the container (14) for operational equipment.

11. Container (14) for operational equipment according to one of Claims 8 to 10, **characterized in that** prefabricated electrical apparatuses (52) are arranged in it.

12. Container (14) for operational equipment according to Claim 13, chararacterized in that it has standardized plug-and-socket connections (50) for connecting the electrical apparatuses (52) to plant components (2, 4, 6).

## Revendications

1. Installation industrielle, notamment centrale électrique, comprenant un certain nombre d'éléments (2, 4, 6) de l'installation, un circuit (8, 9, 10) de refroidissement comme réservoir pour de l'énergie thermique se formant dans une opération s'effectuant dans l'installation, ainsi qu'un conteneur (14) à fluide de fonctionnement constitué sous la forme d'une unité de construction distincte, dans lequel est placé un dispositif (52) électrique pour faire fonctionner les éléments (2, 4, 6) de l'installation, **caractérisée en ce qu'**il est prévu, pour une climatisation du conteneur (14) à fluide de fonctionnement, une installation (16) de climatisation communiquant avec le circuit (8, 9, 10) de refroidissement, qui communique par une unité (18) de commutation avec une source (28) de chaleur et avec un puits (26) de chaleur du circuit (8, 9, 10) de refroidissement pour régler la puissance de l'installation (16) de climatisation.

2. Installation suivant la revendication 1, **caractérisée en ce que** l'installation (16) de climatisation communique avec un circuit (10) de refroidissement auxiliaire du circuit (8, 9, 10) de refroidissement.

3. Installation suivant la revendication 1 ou 2, **caractérisée en ce que** la puissance thermique du circuit (8, 9, 10) de refroidissement est sensiblement plus grande que celle l'installation (16) de climatisation.

4. Installation suivant l'une des revendications précédentes, **caractérisée en ce que** l'installation (16) de climatisation comporte un échangeur de chaleur (44) eau/air.

5. Installation suivant l'une des revendications précédentes, **caractérisée en ce qu'**il est prévu un dispositif (42) de régulation pour régler la puissance de l'installation (16) de climatisation en fonction de la température dans la chambre (14) pour le fluide de fonctionnement.

6. Installation suivant l'une des revendications précédentes, **caractérisée en ce que** le conteneur (14) à fluide de fonctionnement est mobile et comporte à cet effet des moyens (46) de déplacement.

7. Installation suivant l'une des revendications précédentes, **caractérisée en ce qu'**elle est conçue pour la production d'électricité, la puissance électrique maximum que l'on peut produire étant limitée à 5 MW.

8. Conteneur (14) à fluide de fonctionnement pour une installation suivant l'une des revendications précédentes, qui a une installation (16) de climatisation, **caractérisé en ce qu'**il est équipé d'un raccord (39) pour faire communiquer l'installation (16) de climatisation avec un circuit (8, 9, 10) de refroidissement servant de réservoir pour de l'énergie thermique se produisant dans une opération s'effectuant dans l'installation et **en ce qu'**il est prévu une unité (18) de commutation par laquelle l'installation (16) de climatisation peut être mise en communication avec une source (28) de chaleur et avec un puits (26) de chaleur du circuit (8, 9, 10) de refroidissement pour régler la puissance de l'installation (16) de climatisation.

9. Conteneur (14) à fluide de fonctionnement suivant la revendication 8, **caractérisé en ce que** l'installation (16) de climatisation a un échangeur de chaleur (14) eau/air.

10. Conteneur (14) à fluide de fonctionnement suivant la revendication 8 ou 9, **caractérisé en ce qu'**il est prévu un dispositif (42) de régulation pour régler la puissance de l'installation (16) de climatisation en fonction de la température dans la chambre (14) pour le fluide de fonctionnement.

11. Conteneur (14) à fluide de fonctionnement suivant les revendications 8 à 10, **caractérisé en ce que** des dispositifs (52) électriques préfabriqués y sont placés.

12. Conteneur (14) à fluide de fonctionnement suivant la revendication 13, **caractérisé en ce qu'**il a des liaisons (50) par remplissage normalisé pour raccorder les dispositifs (52) électriques aux éléments (2, 4, 6) de l'installation.
